## Europäisches Patentamt
## European Patent Office
## Office européen des brevets

(11) Veröffentlichungsnummer: **0 075 081**
**B1**

(12) **EUROPÄISCHE PATENTSCHRIFT**

(45) Veröffentlichungstag der Patentschrift:
04.02.87

(51) Int. Cl.⁴: **G 01 B 5/00,** G 01 B 5/14,
B 23 Q 23/00

(21) Anmeldenummer: 82105918.5

(22) Anmeldetag: 02.07.82

(54) Fehlerkompensationseinrichtung für Präzisionsmaschinen und Messgeräte.

(30) Priorität: 17.09.81 DE 3136981

(43) Veröffentlichungstag der Anmeldung:
30.03.83 Patentblatt 83/13

(45) Bekanntmachung des Hinweises auf die Patenterteilung:
04.02.87 Patentblatt 87/6

(84) Benannte Vertragsstaaten:
AT CH FR GB IT LI NL SE

(56) Entgegenhaltungen:
CH-A-266 406
DE-A-2 042 505
DE-B-1 231 595
DE-B-2 735 154
DE-C-866 402
DE-C-1 070 522
DE-C-1 303 060
DE-C-2 724 858
US-A-226 162
US-A-299 826
US-A-2 336 550
US-A-3 039 032
US-A-3 182 375

(73) Patentinhaber: **Dr. Johannes Heidenhain GmbH,**
**Nansenstrasse 17, D-8225 Traunreut (DE)**

(72) Erfinder: **Affa, Alfred, Ing. Grad., Hochfellnstrasse**
**6, D-8221 Stein (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Einrichtung zur Fehlerkompensation bei Präzisionsmaschinen und Positions-Meßgeräten, insbesondere für ein gekapseltes Längenmeßgerät zum Messen der Relativlage zweier Objekte, mit einer Maßverkörperung und einem in Meßrichtung verlaufenden, durch Einstellmittel quer zur Meßrichtung abschnittsweise entsprechend dem zu korrigierenden Fehler auslenkbaren Korrekturlineal an einem der vorgenannten Objekte und einer die Maßverkörperung abtastenden Abtasteinrichtung an dem anderen Objekt, sowie mit einem Übertragungselement, das der Abtasteinrichtung eine Korrekturbewegung überlagert, die dem Verlauf des Korrekturlineals entspricht.

Es sind Korrektureinrichtungen zur Kompensation von Maschinenfehlern bekannt. In der DE-C-866 402 wird zum Stand der Technik eine Meßeinrichtung mit Korrekturlineal genannt, deren Ablesemarke mechanisch in eine dem jeweiligen Fehler einer Spindel entsprechende Stellung gegenüber dem Maßstab gesteuert wird. Eine ähnliche Lösung wird in der US-A-226,162 angegeben. Aus der US-A-3,039,032 ist ein Stellungsmeßsystem mit einer Korrekturschablone bekannt, die von einem Fühler abgetastet wird, der direkt auf den Meßwertgeber (Drehmelder) einwirkt. In der CH-A-266 408 ist eine optische Meßeinrichtung vorgeschlagen, bei der korrekturabhängige Steuermittel den Strahlengang in der optischen Ableseeinheit beeinflussen. Die DE-B-12 31 595 zeigt eine Vorrichtung zur elektrischen Fernanzeige der Bewegungen eines beweglichen Maschinenbauteiles, wobei zum Ausgleich von Fehlern ein Kompensationssystem vorhanden ist, welches ein verformbares Metallband aufweist, das von einem Geber abgetastet wird. Ein verformbares Metallband wird auch in der US-A-3,182,375 und der US-A-2,336,550 als Korrekturprofil vorgeschlagen. Ein weiteres Fehlerkorrektursystem ist in der DE-A-20 42 505 beschrieben. Dort erfährt das numerische Meßsystem einer Maschine durch ein die Korrekturschablone abtastendes Organ eine Zusatzbewegung entsprechend dem jeweiligen Fehlerwert der Maschinenspindel.

Ferner sind aus der DE-C-13 03 080, der DE-C-10 70 522 und der US-A-2,995,826 Korrektureinrichtungen bekannt. Dort werden Korrekturschablonen um einen Drehpunkt verschwenkt, dadurch wird das Korrekturprofil quer zur Meßrichtung einstellbar.

Es ist ferner aus der DE-C-27 24 858 bekannt, das Korrekturprofil aus einzelnen Profilabschnitten zu bilden, die nach Art einer Kette gelenkig miteinander verbunden sind und die quer zur Meßrichtung eingestellt werden können. Der Oberbegriff des Anspruches wurde von dieser Druckschrift ausgehend gebildet. Diese Einrichtung ist vorteilhaft, wenn aufgrund von großen Meßlängen eine ebenso lange Korrektureinrichtung erforderlich ist, da aus den einzelnen Profilabschnitten eine beliebig lange Korrektureinrichtung zusammengestellt werden kann.

Ferner ist es, z.B. von HF-Abschirmfedern her, bekannt, ein L-förmiges Profil dadurch biegbar zu machen, daß einer der L-Schenkel Verringerungen seiner Breite, d.h. Einschnitte aufweist.

Die genannten Korrektureinrichtungen arbeiten zum Teil mit zusätzlichen elektrischen bzw. optischen stellgliedern oder Drehgebern oder aber sie sind direkt an die Maschine gekoppelt. In allen Fällen sind sie jedoch konstruktiv sehr aufwendig, dementsprechend kostspielig und in der Herstellung und Montage nicht unproblematisch.

Die der Erfindung zugrunde liegende Aufgabe besteht darin, eine Korrektureinrichtung zu schaffen, die platzsparend ist, die einen großen Korrekturbereich aufweist, die auch nichtlineare Korrekturen erlaubt, deren Eigenfehler vernachlässigbar klein bleibt und die besonders einfach aufgebaut, einfach herstellbar und leicht montierbar ist.

Erfindungsgemäß wird diese Aufgabe bei einer Einrichtung der eingangs genannten Art dadurch gelöst, daß das Korrekturlineal von einem einstückigen L-förmigen Winkelprofil gebildet wird, dessen einer L-Schenkel in Abständen Verringerungen seiner Breite aufweist, so daß sich am anderen L-Schenkel biegbare Stellen ergeben, und daß das L-förmige Winkelprofil zwischen den biegbaren Stellen jeweils einen geradlinigen Verlauf aufweist.

Ein besonderer Vorteil besteht gemäß der Erfindung darin, daß das Profil innerhalb eines Hohlkörpers angeordnet ist, und daß das Profil entsprechend dem zu korrigierenden Fehlerverlauf von außerhalb des Hohlkörpers mittels Exzentern auslenkbar ist.

Zur Einstellung und Fixierung können im wesentlichen genormte, d. h. preiswerte Bauelemente eingebaut werden.

An einem ausführungsbeispiel soll anhand der Zeichnung die Erfindung noch näher erläutert werden.

Es zeigt

Figur 1 einen Querschnitt durch ein gekapseltes Längenmeßgerät,

Figur 2 eine Sicht auf Montagefuß, Schwert, Winkelhebel und teilweise dargestelltes Korrekturlineal,

Figur 3 ein winkelförmiges Korrekturlineal, das aus seiner Geraden ausgelenkt ist,

Figur 4a ein flaches Korrekturprofil mit Verstellung über Exzenter und Kullssenstein,

Figur 4b eine Draufsicht auf das Korrekturprofil gem. Figur 4a,

Figur 5 eine Ansicht einer mit einer Teilung versehenen Abtastplatte und eines Korrekturlinealabschnitts.

Die vereinfachte Schnittdarstellung in Figur zeigt ein gekapseltes Längenmeßgerät mit einem Hohlkörper 1, welches an dem Bett 2 einer

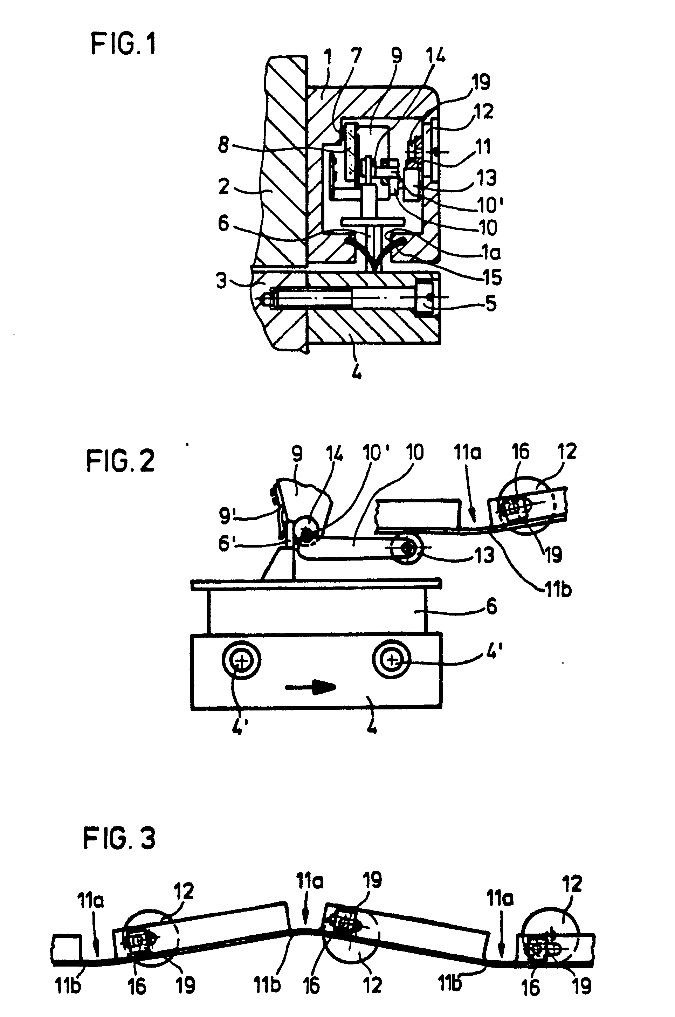

Bearbeitungs- oder Meßmaschine in beliebiger Weise fest angebracht ist. Ein Schlitten 3 der Bearbeitungsoder Meßmaschine trägt einen Montagefuß 4, der beispielsweise mit Schrauben 5 an dem Schlitten befestigt ist. Der Montagefuß 4 weist ein Schwert auf, das durch einen Schlitz 1a in den im übrigen vollkommen geschlossenen Hohlkörper 1 hineinragt. An einer Innenfläche des Hohlkörpers 1 ist über eine elastische Klebeschicht 7 ein Maßstab 8 angebracht, der das Meßnormal verkörpert. Am Maßstab 8 stützt sich eine Abtasteinheit 9 ab, die mit an sich bekannten, in Figur 1 nicht dargestellte, Mitteln die Teilung des Maßstabes 8 abtastet. Die Relativbewegung von Maschinenbett 2 und Maschinenschlitten 3 wird vom Montagefuß 4 und dem Schwert 6 über einen Winkelhebel 10 auf die Abtasteinheit 9 und den Maßstab 8 übertragen. Die Führungsfehler von Maschinenbett 2 und Maschinenschlitten 3 würden ohne Korrektureinrichtung ebenfalls voll übertragen und gingen in das Meßergebnis als Fehler ein. Das Längenmeßgerät weist daher eine Korrektureinrichtung auf, die im Innern des Hohlkörpers angeordnet ist. Ein winkelförmiges, einstückiges Profil 11 weist in Abständen Querschnittsverringerungen 11a, d.h. Verringerungen der Breite eines der Profilschenkel, auf. In der Nähe der Querschnittsverringerungen 11a befinden sich Verstellelemente, hier Erzenter 12, mit denen das Profil 11 aus seiner Geraden - dem zu kompensierenden Fehlerverlauf entsprechend - ausgelenkt wird. Der Winkelhebel 10 ist um eine Achse 10'' schwenkbar mit der Abtasteinheit 9 verbunden. Ein freies Ende des Winkelhebels 10 trägt eine Rolle 13, die bei Verschiebung dem Linienzug des Profiles 11 folgt und den Winkelhebel 10 um die Achse 10'' verschwenkt. Die Schwenkbewegung des Winkelhebels 10 entspricht dem zu korrigierenden Fehlerverlauf der Einrichtung.

Die Korrektur wird durch einen zweiten Arm des Winkelhebels 10 - der auch als Exzenter 14 ausgebildet sein kann - vorgenommen, der die Schwenkbewegung des Winkelhebels 10 in eine Relativbewegung zwischen der Abtasteinheit 9 und dem Schwert 6 umsetzt. Das durch den Schlitz 1a des Hohlkörpers ragende Schwert 6 wird von dachförmig angeordneten Dichtlippen 15 eng umschlossen, so daß auch an dieser Stelle die sichere Kapselung der Meßeinrichtung gewährleistet ist.

In der Figur 2 ist zur besseren Verständlichkeit nur ein Teil der Bauelemente in der Seitenansicht gezeigt. Der Montagefuß 4 mit den Bohrungen 4, für die Befestigungsschrauben trägt das Schwert 6, dessen Oberseite mit einem zylindrischen Mitnehmer 6'' versehen ist, an dem der Winkelhebel 10 mit seinem Exzenter 14 angreift. Die Abtasteinheit 9 ist als Fragment nur soweit dargestellt, daß die Befestigung des Winkelhebels 10 mittels einer aus der Abtasteinheit 9 herausragenden Achse 10'' erkennbar ist. Wird nun der Montagefuß 4 in Pfeilrichtung verschoben, folgt die Abtasteinheit 9 dieser Längsbewegung, da sie mit einer Feder 9' an dem Mitnehmer 6'' gehalten ist, und der Winkelhebel 10 mit der Rolle 13 tastet das Profil 11 ab, dessen Kurvenverlauf über Exzenter 12 entsprechend dem Fehlerverlauf eingesiellt ist. Dabei verschwenkt sich der Winkelhebel 10 um die Achse 10', und aufgrund des Erzenters 14 verändert sich der Abstand zwischen der Abtasteinheit 9 und dem zylindrischen Mitnehmer 6', also auch dem Montagefuß. Der Führungsfehler, dem der Montagefuß 4 samt dem Maschinenschlitten 3 unterliegt, kann also durch eine von dem einstellbaren Profil 11 verursachte Relativbewegung zwischen Abtasteinheit 9 und Montagefuß 4 kompensiert werden.

In der Figur 3 ist ein Korrekturprofil 11 gezeigt, das durch die Exzenter 12 ausgelenkt ist. Es ist der geradlinige Verlauf des Kurvenzuges zwischen den Querschnittsverringerungen 11a zu erkennen, wobei letztere Biegestellen 11b ermöglichen. Da sich durch die Auslenkung Längenänderungen ergeben, ist das Profil 11 mit Langlöchern 16 versehen, die Längsverschiebungen des gesamten Korrekturprofiles 11 ermöglichen. Ein Ende des Korrekturprofiles ist in bekannter, nicht gezeigter Weise in Bezug auf den Messungsnullpunkt festgelegt.

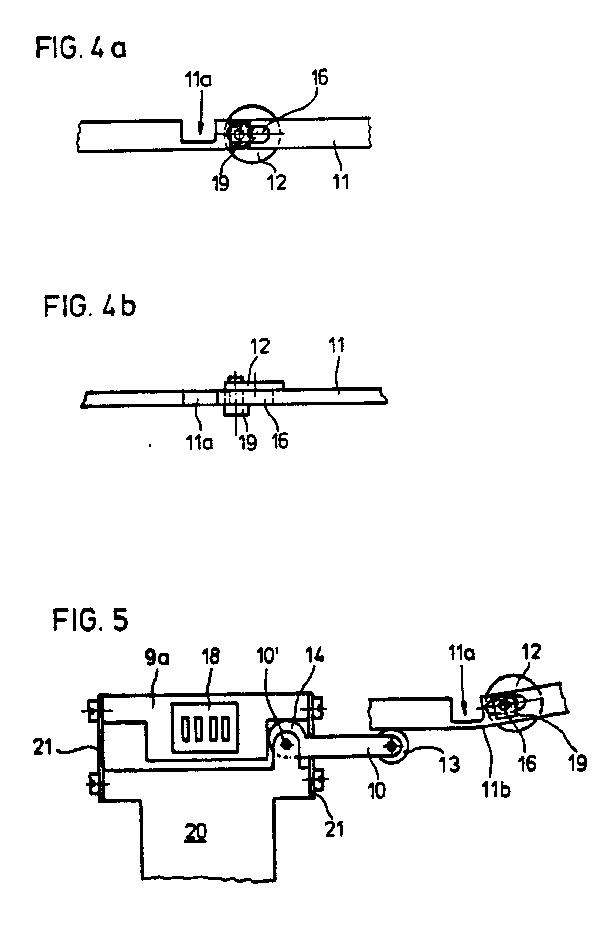

In Figur 5 ist eine mit einer Teilung 18 versehene Abtastplatte ga gezeigt. Bei dieser Ausführung handelt es sich - wie bei Figur 1 - um ein lichtelektrisches digitales Längenmeßgerät. Bei einer einfachen Bauart ist die Abtasteinheit 9 nicht am Maßstab 8 geführt, sondern ist direkt über einen Mitnehmer 20 mit einem der obengenannten Objekte 3 verbunden. Die Abtastplatte 9a ist über Blattfedern 21 mit dem Mitnehmer 20 so verbunden, daß sie vom Übertragungselement 10, 13 und 14 in Meßrichtung bewegt werden kann. Nach erfolgter Auslenkung des Korrekturlineals 11 entsprechend des Fehlerverlaufs der Maschine wird das Korrekturlineal 11 am Hohlkörper 1 mit Hilfe von Klemmelementen 19 in seiner Lage fixiert. Besonders geeignet sind dazu handelsübliche genormte Muttern, da bei Verwendung dieser Elemente 19 und dem winkelförmigen Profil 11 ein Schenkel des Profilwinkels 11 als Verdrehsicherung dient. Eine weitere Möglichkeit der Fixierung besteht in der Verwendung von sogenannten Kulissensteinen, die einen Klemmflansch aufweisen.

Es liegt im Wesen der Erfindung, daß sie sich nicht auf lichtelektrische digitale Längenmeßgeräte beschränkt, sondern die Erfindung ist ebenso vorteilhaft bei optischen, induktiven, kapazitiven und magnetischen Meßgeräten einsetzbar. Die Erfindung ist selbstverständlich nicht auf die Korrektur von Führungsfehlern beschränkt, sondern auch zur Korrektur von inneren Teilungsfehlern geeignet.

## Patentanspruch

1. Einrichtung zur Fehlerkompensation bei Präzisionsmaschinen und Positions-Meßgeräten, insbesondere für ein gekapseltes Längenmeßgerät zum Messen der Relativlage zweier Objekte (2, 3), mit einer Maßverkörperung (8) und einem in Meßrichtung verlaufenden, durch Einstellmittel (12) quer zur Meßrichtung abschnittsweise entsprechend dem zu kompensierenden Fehler auslenkbaren Korrekturlineal (11) an einem der vorgenannten Objekte (2) und einer die Maßverkörperung (8) abtastenden Abtasteinrichtung (9) an dem anderen Objekt (3) sowie mit einem Übertragungselement (10), das der Abtasteinrichtung (9) eine Korrekturbewegung überlagert, die dem Verlauf des Korrekturlineals (11) entspricht, dadurch gekennzeichnet, daß das Korrekturlineal (11) von einem einstückigen L-förmigen Winkelprofil gebildet wird, dessen einer L-Schenkel in Abständen Verringerungen seiner Breite (11a) aufweist, so daß sich am anderen L-Schenkel biegbare Stellen (11b) ergeben, und daß das L-förmige Winkelprofil zwischen den biegbaren Stellen (11b) jeweils einen geradlinigen Verlauf (11c) aufweist.

## Claim

1. Device for compensating errors in precision machines and position measuring instruments, in particular for an encased longitudinal measuring instrument for measuring the relative position of two objects (2, 3), having a measuring embodiment (8) and a correcting bar (11) on one of the abovementioned objects (2), which correcting bar (11) runs in the measuring direction and can be deflected transversely to the measuring direction in stages by an adjusting means (12) in accordance with the error to be compensated, and having a scanning device (9) on the other object (3), which scanning device (9) scans the measuring embodiment (8), and also having a transfer element (10) which superimposes a correcting movement on the scanning device (9), which correcting movement corresponds to the course of the correcting bar (11), characterized in that the correcting bar (11) is formed from a one-piece L-shaped angle section, one L-leg of which has reductions in its width (11a) at intervals, so that flexible locations (11b) result on the other L-leg, and that the L-shaped angle section in each case has a straight course (11c) between the flexible locations (11b).

## Revendication

1. Dispositif de compensation des erreurs pour les machines de précision et les appareils de mesure de position, en particulier pour un appareil de mesure de longueurs blindé servant à mesurer la position relative de deux objets (2, 3), comprenant, installés sur l'un des objets précités (2), une échelle graduée (8) et une règle de correction (11) qui est disposée dans le sens de la mesure et peut être déviée par des moyens de réglage (12) section par section transversalement au sens de la mesure conformément à l'erreur à corriger et, installé sur l'autre objet (3), un dispositif de balayage (9) explorant l'échelle graduée (8), ainsi qu'un élément de transmission (10) superposant au dispositif de balayage (9) un mouvement de correction qui correspond au tracé de la règle de correction (11), caractérisé par le fait que la règle de correction (11) est formée par une cornière d'une seule pièce en forme de L dont une branche du L comporte, par intervalles, des réductions de sa largeur (11a) de manière à constituer sur l'autre branche du L des endroits flexibles (11b) et que la cornière en forme de L présente un tracé rectiligne (11c) entre les endroits flexibles respectifs (11b).

FIG.1

FIG.2

FIG.3

0 075 081

FIG. 4 a

FIG. 4 b

FIG. 5

3